# EUROPÄISCHE PATENTANMELDUNG

(11) **EP 4 242 929 A1**
(43) Veröffentlichungstag der Anmeldung: **13.09.2023**
(21) Anmeldenummer: 22160769.0
(22) Anmeldetag: 08.03.2022
(51) Int. Cl.: G06N 3/08, G06N 3/04

(54) **COMPUTERIMPLEMENTIERTES VERFAHREN ZUM TRAINIEREN EINES KÜNSTLICHEN NEURONALEN NETZES (KNN) MIT EINER SAMPLESCHWERPUNKTOPTIMIERUNG ZUR ERHÖHUNG EINER KLASSIFIKATIONSGENAUIGKEIT DES KNN UND TRAININGSEINRICHTUNG**

(71) Anmelder: Basler AG, 22926 Ahrensburg (DE)
(72) Erfinder: Larsen, Anna, 23562 Lübeck (DE); Lux, Pauline, 23564 Lübeck (DE)
(74) Vertreter: Eisenführ Speiser

(57) **Zusammenfassung**

Die Erfindung betrifft ein computerimplementiertes Verfahren zum Trainieren eines künstlichen neuronalen Netzes KNN und insbesondere zur Erhöhung einer Klassifikationsgenauigkeit des KNN, umfassend die Schritte: Bereitstellen (100) eines gelabelten Trainingsdatensatzes (X, Y, Z) zum Trainieren des KNN, wobei der gelabelte Trainingsdatensatz wenigstens erste Daten (X) aufweist, die einer ersten Datenklasse (Kx) zugeordnet sind, wobei die ersten Daten (X) aus einer Vielzahl von ersten Datensamples (xᵢ) ausgebildet sind und der Trainingsdatensatz zweite Daten (Y) aufweist, die einer zweiten Datenklasse (K_{y}) zugeordnet sind, wobei die zweiten Daten (Y) aus einer Vielzahl von zweiten Datensamples (yᵢ) ausgebildet sind; Vorwärtspropagieren (200) des bereitgestellten Trainingsdatensatzes von einer Eingangsschicht des KNN durch wenigstens eine versteckte Schicht bis zu einer Ausgangsschicht des KNN, insbesondere um die ersten Datensamples (xᵢ) und die zweiten Datensamples (yᵢ) in einen mehrdimensionalen Merkmalsraum abzubilden; Optimieren (300) einer Kostenfunktion (L) des KNN, dadurch gekennzeichnet, dass das Optimieren ein Bestimmen (310) eines ersten Sampleschwerpunktes (cₓᵢ) für die Vielzahl der ersten Datensamples (xᵢ) umfasst und ein Bestimmen eines zweiten Sampleschwerpunkts (c_{yi}) für die Vielzahl der zweiten Datensamples (yᵢ), und ein Minimieren (320) eines Abstands der ersten Datensamples (xᵢ) zu dem bestimmten ersten Sampleschwerpunkt (cₓᵢ) und ein Minimieren eines Abstands der zweiten Datensamples (yᵢ) zu dem bestimmten zweiten Sampleschwerpunkt (c_{yi}) erfolgt, und ein Maximieren (330) eines Abstands des bestimmten ersten Sampleschwerpunktes (cₓᵢ) zu dem bestimmten zweiten Sampleschwerpunkt (c_{yi}) erfolgt.

## Beschreibung

Die vorliegende Erfindung betrifft ein computerimplementiertes Verfahren zum Trainieren eines künstlichen neuronalen Netzes. Zudem betrifft die vorliegende Erfindung eine Trainingseinrichtung zum Trainieren eines künstlichen neuronalen Netzes.

Künstliche neuronale Netze (KNN) sind Stand der Technik für viele Anwendungen und haben Marktreife für industrielle Anwendungen erlangt, beispielsweise im Bereich Computer Vision. Dort werden KNN beispielsweise zur Bildklassifizierung oder zur Gesichtserkennung eingesetzt. Klassifizieren bedeutet dabei das Zuordnen eines unbekannten Datensamples zu einer Datenklasse.

Moderne Architekturen von KNN, die sich vor allem auf Bilder als Datengrundlage beziehen, und die als Netzwerkarchitekturen bezeichnet werden können, sind beispielsweise Convolutional Neural Networks (CNN), die in weitere Unterklassen unterteilt werden können, wie in das Residual Network (ResNet) oder das VGG Network (z.B. VGG-16). Die genannten Netzwerke sind Beispiele für bekannte Netzwerkarchitekturen. Diese KNN erreichen für Problemstellungen der Klassifikation oder Detektion auf komplexen Datensätzen mit einigen hundert bis tausend Klassen, eine gute Performance.

Für den Einsatz in der Industrie ist eine hohe Anforderung bezüglich der Klassifikationsgenauigkeit an KNN gestellt. Aus diesem Grund werden Anstrengungen unternommen, KNN zu optimieren damit sie eine ausreichend hohe Klassifikationsgenauigkeit erreichen.

Dabei sind im Stand der Technik verschiedene Methoden bekannt, um die Klassifikationsgenauigkeit von KNN zu erhöhen.

Es ist beispielsweise bekannt, tiefere, breitere und komplexere Netzwerkstrukturen zu verwenden, um verbesserte/komplexere Bildmerkmale zu erhalten/abbilden zu können. Das Ziel bei diesem Ansatz ist, durch die Verwendung größerer Architekturen, mehr diskriminierende Bildmerkmale zu erhalten. Diskriminierende Bildmerkmale können auch als Unterscheidungsmerkmale oder unterscheidbare Merkmale verstanden werden. Problematisch an diesem Ansatz ist aber, dass das Training solcher großen Netze relativ schwierig und nicht so effektiv ist.

Andere Bemühungen betreffen eine Optimierung der Netzwerkarchitektur selbst. Beispielsweise ist es bekannt verschiedene nichtlineare Aktivierungen der Knoten der KNN vorzunehmen, sog. Dropout-Funktionen in Knoten des KNN durchzuführen oder eine Batch-Normalisierung in den verstecken Schichten durchzuführen, um die Leistung bzw. Klassifikationsgenauigkeit der KNN zu verbessern.

Ein dritter bekannter Ansatz ist, auf den sich auch die vorliegende Erfindung bezieht, eine Verwendung von Hilfsfunktionen, die als zusätzlicher Term in einer zu minimierenden Kostenfunktion beim Trainieren des KNN berücksichtigt werden.

Eine aus dem Bereich des dritten Ansatzes bekannter Stand der Technik ist das Paper C. Qi and F. Su, "Contrastive-center loss for deep neural networks," 2017 IEEE International Conference on Image Processing (ICIP), 2017, pp. 2851-2855, doi: 10.1109/ICIP.2017.8296803. Darin wird eine Berücksichtigung des sogenannten "contrastive-center loss" vorgeschlagen, der in der zu minimierenden Kostenfunktion berücksichtigt wird, um die Klassifikationsgenauigkeit eines KNN zu erhöhen. Dies wird in dem genannten Paper erreicht, indem in einem hochdimensionalen Raum gleichzeitig die Entfernungen der Trainingssamples zu ihren entsprechenden Klassenzentren und die Summe der Entfernungen der Trainingssamples zu ihren nicht-korrespondierenden Klassenzentren optimiert werden. Die Klassenzentren können auch als Klassenschwerpunkte verstanden werden.

Das Ziel, das dieser Ansatz verfolgt, und das auch die anderen zuvor genannten Optimierungsansätze verfolgen, ist also, die mit dem KNN extrahierten Bildmerkmale möglichst diskret in einem hochdimensionalen Raum zu verteilen, damit die Klassifizierung der Bildmerkmale einfacher erfolgen kann. Einfach gesprochen, möchte man erreichen, dass die Bildmerkmale bzw. die Bildsamples in dem hochdimensionalen Raum für unterschiedliche Klassen gut voneinander zu unterscheiden sind.

Aufgabe der vorliegenden Erfindung ist es deshalb, eines der oben genannten Probleme zu adressieren, den allgemeinen Stand der Technik zu verbessern oder eine Alternative zu bisher Bekanntem bereitzustellen. Insbesondere soll eine Lösung bereitgestellt werden mit der die Klassifikationsgenauigkeit eines künstlichen neuronalen Netzes erhöht wird.

Erfindungsgemäß wird dazu ein computerimplementiertes Verfahren zum Trainieren eines künstlichen neuronalen Netzes gemäß Anspruch 1 vorgeschlagen. Der Begriff künstliches neuronales Netz wird durch KNN abgekürzt. Das computerimplementierte Verfahren ist in einer besonderen Ausführungsform zur Erhöhung einer Klassifikationsgenauigkeit des KNN geeignet.

Es wird also ein Verfahren vorgeschlagen, dass Verfahren mit oder auf einem Computersystem bzw. computergestützt ausgeführt wird. Das KNN ist also in dem Computersystem implementiert und es ist trainierbar ausgebildet.

Das Verfahren umfasst den Schritt Bereitstellen eines gelabelten Trainingsdatensatzes zum Trainieren des KNN. Ein gelabelter Trainingsdatensatz ist dabei ein Datensatz, der aus einer Vielzahl von Trainingsdaten ausgebildet ist, wobei die Trainingsdaten in Klassen bzw. Datenklassen klassifiziert sind. Bekannte gelabelte Trainingsdatensätze sind beispielsweise MNIST oder CIFAR10. Der MNIST Trainingsdatensatz weist beispielsweise 60000 einzelne Trainingsbilder und 10000 Testbilder auf. Die Bilder sind dabei in 10 Klassen unterteilt. Es gibt also 6000 Bilder die einer ersten (Daten-) Klasse zugeordnet sind, weitere 6000 Bilder die einer zweiten Klasse zugeordnet sind, 6000 Bilder die einer dritten Klasse zugeordnet sind, usw. Die zehn Klassen des MNIST Trainingsdatensätze sind beispielsweise von 0 bis 9 durchnummeriert. Ein gelabelter Trainingsdatensatz ist also aus gelabelten Trainingsdaten ausgebildet, also aus Daten die zum Trainieren des KNN verwendet werden. Unter gelabelten Daten werden sowohl unabhängige Variablen (Features) als auch abhängige Variablen (Label) verstanden. Das Label fließt mit in das Modelltraining des KNN ein, damit das trainierte Modell bzw. KNN bei neuen Daten (ohne Label) das Label vorhersagen kann.

Das Bereitstellen des gelabelten Trainingsdatensatzes erfolgt beispielsweise mit einem dazu eingerichteten Datenspeicher, der beispielsweise Teil des Computersystems ist, das das computerimplementierte Verfahren ausführt oder der Teil einer Trainingseinrichtung ist, die zum Ausführen des vorgeschlagenen Verfahrens eingerichtet ist.

Der gelabelte Trainingsdatensatz weist dabei wenigstens erste Daten auf, die einer ersten Datenklasse zugeordnet sind. Die ersten Daten sind dabei aus einer Vielzahl von ersten Datensamples ausgebildet. Es wird also vorgeschlagen, dass der Trainingsdatensatz eine Vielzahl von ersten klassifizierten Daten aufweist und die Gesamtmenge der ersten Daten aus den einzelnen Datensamples ausgebildet ist. Ein Beispiel für solche Daten sind zum Beispiel Bilddaten bzw. digitale Bilder, die aus der Vielzahl von klassifizierten einzelnen Bildern ausgebildet sind, wobei die einzelnen Bilder einer ersten Datenklasse zugeordnet sind. Die Daten können grundsätzlich beliebig sein, es kann sich z. B. auch um klassifizierte Audiodaten oder sonstige klassifizierte Messdaten handeln, je nach Anwendung. An dem zuvor beschriebenen MNIST Datensatz veranschaulicht, sind die ersten Daten z. B. 6000 Bilder, die einer ersten Klasse zugeordnet sind, und die Vielzahl der Datensamples sind die einzelnen Bilder.

Der Trainingsdatensatz weist zudem zweite Daten auf, die einer zweiten Datenklasse zugeordnet sind. Dabei sind die zweiten Daten aus einer Vielzahl von zweiten Datensamples ausgebildet. Es wird also vorgeschlagen, dass der Trainingsdatensatz wenigstens aus zwei klassifizierten Datensätzen ausgebildet ist. Erneut an dem MNIST Datensatz veranschaulicht, sind die ersten Daten z.B. 6000 Bilder, die einer ersten Klasse zugeordnet sind und die zweiten Daten sind z. B. 6000 Bilder die einer anderen zweiten Klasse zugeordnet sind.

Die Daten, also die ersten und zweiten Daten, können synonym als Trainingsdaten bezeichnet werden. Die Datensamples, also die ersten und zweiten Datensamples, können synonym als Trainingssamples bezeichnet werden.

Das Verfahren umfasst zudem den Schritt Vorwärtspropagieren des bereitgestellten Trainingsdatensatzes von einer Eingangsschicht des KNN durch wenigstens eine versteckte Schicht bis zu einer Ausgangsschicht des KNN. Es wird also vorgeschlagen, dass das KNN mit dem Trainingsdatensatz in einem Trainingsverfahren trainiert wird und dazu der Trainingsdatensatz, der aus den zwei unterschiedlich klassifizierten Daten besteht, in das KNN eingeben wird. Durch die Formulierung "wenigstens eine versteckte Schicht", wird dabei zum Ausdruck gebracht, dass das vorgeschlagene Verfahren auch auf ein KNN mit nur einer versteckten Schicht anwendbar ist. Es kann aber auch für tiefe KNN verwendet werden. Die Architektur des KNN richtet sich entsprechend nach der Komplexität der Klassifikationsaufgabe. Das Vorwärtspropagieren erfolgt bevorzugt Batchweise, das heißt, es werden mehrere erste und zweite Datensamples in das KNN eingegeben bevor die Gewichte angepasst werden. Die Größe des Batches wird typischerweise über die sogenannte "Batch Size" vorgegeben. Die Batch Size definiert dabei wie viele Bilder pro Update der Gewichte des KNN zum Training verwendet werden.

In einer besonders bevorzugten Ausführungsform werden durch das Vorwärtspropagieren die ersten Datensamples und die zweiten Datensamples in einen mehrdimensionalen Merkmalsraum abgebildet. Dieser Raum ist auch als Featureraum oder hochdimensionaler Raum bekannt.

Der Schritt Vorwärtspropagieren kann deshalb auch als Abbilden der Daten bzw. Datensamples in den mehrdimensionalen Merkmalsraum aufgefasst werden.

Das KNN bzw. die versteckten Schichten werden auch als "Feature Extractor" bezeichnet, da es Bildmerkmale aus den in das KNN eingegebene Daten extrahiert und die Datensamples bzw. Trainingssamples in den mehrdimensionalen Merkmalsraum abbildet.

Das Vorwärtspropagieren erfolgt beispielsweise mit einem dazu eingerichteten Trainingsmodul, das beispielsweise Teil des Computersystems ist, das das computerimplementierte Verfahren ausführt oder das Teil einer Trainingseinrichtung ist, die zum Ausführen des vorgeschlagenen Verfahrens eingerichtet ist.

Das Verfahren umfasst zudem den Schritt Optimieren einer Kostenfunktion des KNN. Es versteht sich, dass das Optimieren der Kostenfunktion in der Regel erfolgt, indem die Gewichte des KNN iterativ angepasst werden, bis die Kostenfunktion minimal ist oder zumindest ein Minimum gefunden wurde. Das Optimieren einer Kostenfunktion durch Trainieren bzw. Anpassung der Gewichte des KNN ist grundsätzlich bekannt. Im Prinzip erfolgt das Anpassen der Gewichte des KNN solange, bis die verwendete Kostenfunktion ein Minimum aufweist. Zum Minimieren und Anpassen der Gewichte sind verschiedene Verfahren bekannt, wie z.B. Gradientenabstiegsverfahren, Stochastischer Gradientenabstieg (engl. "Stochastic Gradient Descent", SGD), Batch-Gradientenabstieg, Mini-Batch-Gradientenabstieg, Levenberg-Marquardt Algorithmus oder dergleichen.

Das Optimieren der Kostenfunktion bzw. Anpassen der Gewichte des KNN erfolgt beispielsweise mit einem dazu eingerichteten Anpassungsmodul, das beispielsweise Teil des Computersystems ist, das das computerimplementierte Verfahren ausführt oder das Teil einer Trainingseinrichtung ist, die zum Ausführen des vorgeschlagenen Verfahrens eingerichtet ist.

Das Optimieren der Kostenfunktion umfasst dabei den Schritt Bestimmen eines ersten Sampleschwerpunktes für die Vielzahl der ersten Datensamples und Bestimmen eines zweiten Sampleschwerpunkts für die Vielzahl der zweiten Datensamples. Die Sampleschwerpunkte können synonym auch als Klassenschwerpunkte bezeichnet werden. Es wird also vorgeschlagen, dass wenigstens ein erster und ein zweiter Klassenschwerpunkt für die unterschiedlichen klassifizierten Datensamples bestimmt wird. Die Bestimmung der Klassenschwerpunkte erfolgt dabei in dem mehrdimensionalen Merkmalsraum. Werden beispielsweise nur Datensamples verwendet, die einer ersten und einer zweiten Klasse zugeordnet sind, wird für die Datensamples der ersten Klasse ein erster Klassenschwerpunkt bestimmt und für die Datensamples der zweiten Klasse ein anderer zweiter Klassenschwerpunkt bestimmt. Werden Datensamples verwendet, die zehn Klassen aufweisen, werden entsprechend zehn Klassenschwerpunkte bestimmt, usw.

Das Optimieren umfasst zudem den Schritt Minimieren eines Abstands der ersten Datensamples zu dem bestimmten ersten Sampleschwerpunkt und ein Minimieren eines Abstands der zweiten Datensamples zu dem bestimmten zweiten Sampleschwerpunkt. Es wird also vorgeschlagen, dass nachdem die Sampleschwerpunkte der jeweiligen Klassen bestimmt wurden, der Abstand der Datensamples zu dem bestimmten Sampleschwerpunkt minimiert wird. Es versteht sich, dass das Minimieren der Abstände der Datensamples zu dem jeweiligen Sampleschwerpunkt durch eine Anpassung der Gewichte des KNN erfolgt. Durch Anpassung der Gewichte werden die Datensamples sozusagen in dem Merkmalsraum verschoben, bis der Abstand der Summe aller Datensamples zu dem Sampleschwerpunkt minimal ist.

Das Optimieren umfasst zudem den Schritt Maximieren eines Abstands des bestimmten ersten Sampleschwerpunktes zu dem bestimmten zweiten Sampleschwerpunkt. Es wird also vorgeschlagen, dass zudem der Abstand der Sampleschwerpunkte zueinander maximiert wird. Das Maximieren des Abstandes der Sampleschwerpunkte erfolgt dabei analog wie zuvor beschrieben durch Anpassung der Gewichte. Werden mehr als zwei Sampleschwerpunkte bestimmt, erfolgt die Maximierung aller Abstände der Sampleschwerpunkte zueinander.

Es versteht sich dabei, dass die Reihenfolge der Schritte Minimieren der Abstände der Datensamples zu den Sampleschwerpunkten und Maximieren der Abstände der Sampleschwerpunkte zueinander beliebig ist. Diese Schritte können gleichzeitig ausgeführt werden oder auch nacheinander oder in umgekehrter Reihenfolge stattfinden. Es könnte also zuerst der Abstand der Datensamples zu den jeweiligen Sampleschwerpunkten minimiert werden und anschließend der Abstand der Sampleschwerpunkte zueinander maximiert werden, oder umgekehrt. Die Minimierung und die Maximierung können auch gleichzeitig erfolgen.

In einem konkreten Anwendungsbeispiel kann die zuvor beschrieben Optimierung erfolgen, in dem beim Trainieren des KNN eine Kostenfunktion verwendet wird, die einen Hilfsterm umfasst, der die zuvor genannten Schritte bewirkt.

Die Schritte Minimieren eines Abstands der ersten Datensamples zu dem bestimmten ersten Sampleschwerpunkt und ein Minimieren eines Abstands der zweiten Datensamples zu dem bestimmten zweiten Sampleschwerpunkt und Maximieren eines Abstands des bestimmten ersten Sampleschwerpunktes zu dem bestimmten zweiten Sampleschwerpunkt können demnach auch aufgefasst ausgedrückt werden als: Optimieren einer Kostenfunktion durch Anpassung von Gewichten des KNN, wobei die Kostenfunktionen eine Minimierung eines Abstandes der ersten Datensamples zu dem bestimmten ersten Sampleschwerpunkt bewirkt und die Kostenfunktion eine Minimierung eines Abstandes der zweiten Datensamples zu einem zweiten Sampleschwerpunkt bewirkt und die Kostenfunktion eine Maximierung eines Abstands des bestimmten ersten Sampleschwerpunktes zu dem bestimmten zweiten Sampleschwerpunkt bewirkt.

Das zu trainierende KNN weist anpassbare Gewichte auf. Die Gewichte oder Gewichtungen von KNN sind dabei grundsätzlich bekannt.

Das zuvor beschriebene Minimieren und Maximieren erfolgt beispielsweise mit einem dazu eingerichteten Optimierungsmodul, das beispielsweise Teil des Computersystems ist, das das computerimplementierte Verfahren ausführt oder das Teil einer Trainingseinrichtung ist, die zum Ausführen des vorgeschlagenen Verfahrens eingerichtet ist.

Es wurde vorliegend erkannt, dass durch eine Maximierung der bestimmten Sampleschwerpunkte bzw. Klassenschwerpunkte zueinander im Vergleich zu bekannten Optimierungsverfahren eine erhöhte Klassifikationsgenauigkeit erreicht werden kann. Hervorgerufen wird die erhöhte Klassifikationsgenauigkeit durch die Maximierung der Sampleschwerpunkt zueinander, da die mit dem KNN klassifizierten Datensamples diskret und beanstandet zueinander im Merkmalsraum abgebildet werden, nachdem der Optimierungsprozess bzw. das Training des KNN abgeschlossen ist. Zudem ist das vorgeschlagene Verfahren im Gegensatz zu anderen Ansätzen sehr einfach zu implementieren und auch unabhängig von der Architektur des KNN anwendbar.

Das zuvor beschriebene Optimierungsverfahren eignet sich grundsätzlich um beliebige KNN zu trainieren, die in verschiedenen speziellen Anwendungsgebieten eingesetzt werden, wie z.B. im speziellen Anwendungsgebiet der Bildverarbeitung, der Sprachverarbeitung, der Fehlererkennung für vorbeugende Instandhaltung, medizinischer Analysen, selbstfahrende Autos, Schätzverfahren etc. Da eine Kostenfunktion optimiert wird, ist auch die Architektur des KNN im Grunde beliebig. Das vorgeschlagene Verfahren kann als beispielsweise auf flache oder tiefe KNN gleichermaßen angewendet werden, also z.B. für faltende KNN, residuale KNN oder dergleichen.

Auch das verwendete Trainingsverfahren ist im Grunde beliebig, solange eine Kostenfunktion darin optimiert wird. Beispielsweise kann das Trainingsverfahren ein überwachtes oder ein bestärkendes Lernverfahren sein.

Vorzugsweise sind die ersten und zweiten Daten Bilddaten und jedes Datensample in dem Merkmalsraum entspricht einer Abbildung eines einzelnen Bildes, das in das KNN eingegebenen wurde. Es wird also bevorzugt ein bildverarbeitendes KNN vorgeschlagen, mit dem beispielsweise eine Bildklassifikation durchführbar ist.

Vorzugsweise wird das Verfahren mit einem Computer Vision System ausgeführt, insbesondere mit oder auf einer GPU. Es wird also vorgeschlagen, dass das Verfahren für das spezielle Anwendungsgebiet Computer Vision bzw. im Bereich der Bildverarbeitung eingesetzt wird.

Vorzugsweise erfolgt das Optimieren der Kostenfunktion durch Anpassung von Gewichten des KNN in einem überwachten Lernverfahren. Überwachte Lernverfahren sind dabei grundsätzlich bekannt.

Vorzugsweise wird das Optimieren der Kostenfunktion mittels eines Gradientenabstiegsverfahren oder dergleichen optimiert. Das Gradientenabstiegsverfahren ist ein besonders einfaches und robustes Lernverfahren, weshalb sich dieses besonders gut für das vorgeschlagen Verfahren eignet.

Vorzugsweise ist das KNN ein tiefes KNN mit wenigstens zwei versteckten Schichten. In einer besonders bevorzugten Ausführungsform ist das KNN zur Bildklassifikation eingerichtet. In einer besonders bevorzugten Ausführungsform ist das KNN ein faltendes KNN (CNN), ein rekurrentes neuronales Netz (RNN), ein residuales neuronales Netz (ResNet) oder dergleichen.

Vorzugsweise werden die Abstände der Datensamples zu dem Sampleschwerpunkt aufsummiert und die Berechnung der Abstände wird mittels einer Normberechnung ( ∥·∥ ) bestimmt. Es wird also vorgeschlagen, dass die einzelnen Abstände der einzelnen Datensamples zu dem jeweiligen Sampleschwerpunkt mit einer Normberechnung bestimmt bzw. berechnet werden und sämtliche Abstände einer Klasse aufsummiert werden, um einen Gesamtabstand zu bestimmen. Es wird dann durch die Optimierung (Anpassung der Gewichte) ein minimaler Wert für die aufsummierten Abstände bzw. den Gesamtabstand gesucht.

Vorzugsweise werden die Abstände der Sampleschwerpunkte zueinander aufsummiert und die Berechnung der Abstände der Sampleschwerpunkte wird mit einer Normberechnung ( ||·|| ) bestimmt. Es wird also vorgeschlagen, dass die einzelnen Abstände der einzelnen Sampleschwerpunkte zueinander mit einer Normberechnung bestimmt bzw. berechnet werden und die Abstände sämtlicher Sampleschwerpunkte zueinander aufsummiert werden. Es wird dann durch die Optimierung (Anpassung der Gewichte) ein maximaler Wert für die aufsummierten Abstände bzw. den Gesamtabstand gesucht.

Normberechnungen sind grundsätzlich bekannt und hängen davon ab, für welchen (Vektor-) Raum der Abstand mit der Norm bestimmt werden soll. Eine Norm ist dabei eine Abbildung, die einem Objekt eine Zahl zuordnet, die auf gewisse Weise die Größe des Objekts beschreiben soll. Die Normberechnung kann auch als Abstandsberechnung aufgefasst werden. Es versteht sich, dass die anzuwendende Normberechnung davon abhängt, für welchen Raum diese bestimmt wird, also mathematisch gesprochen, für welchen Vektorraumen die Berechnung erfolgt. Für einen endlichdimensionalen Raum, wie ein zweidimensionaler Raum, ist beispielweise die Euklidische Norm ∥x∥₂ oder die p-Norm ∥x∥*ₚ* bekannt. Für einen unendlichdimensionalen Raum ist beispielsweise die L^{p}-Norm ∥x∥*_{l^{p}}* bekannt.

Vorzugsweise weist der gelabelte Trainingsdatensatz eine Vielzahl von Daten auf, die jeweils einer unterschiedlichen Datenklasse zugeordnet sind und die Daten sind aus einer Vielzahl von Datensamples ausgebildet, und für jede Vielzahl von Datensamples wird jeweils ein Klassenschwerpunkt bestimmt, und der Abstand der Datensamples zu den zugehörigen Klassenschwerpunkten wird minimiert und der Abstand der Klassenschwerpunkte wird zueinander maximiert. Es wird also vorgeschlagen, dass Trainingsdaten beliebig viele Klassen aufweisen und das Optimierungsverfahren für jede Klasse erfolgt. Es wird also zu jeder Klasse zuerst ein Sampleschwerpunkt bzw. Klassenschwerpunkt bestimmt. Es werden die Abstände der jeweiligen Datensamples zu dem jeweiligen und zugehörigen Sampleschwerpunkt minimiert. Anschließend werden die Abstände aller Sampleschwerpunkte zueinander maximiert.

Vorzugsweise umfasst das Optimieren der Kostenfunktion den zusätzlichen Schritt Initiieren des ersten Sampleschwerpunktes und/oder des zweiten Sampleschwerpunkts mit einem Initialwert. Es versteht sich, dass wenn mehr als zwei Klassen vorliegen und mehr als zwei Sampleschwerpunkte bestimmt werden, die Initiierung der sämtlichen Sampleschwerpunkte erfolgt. Der Initialwert kann beispielsweise ein Zufallswert sein.

Vorzugsweise umfasst der Schritt Optimieren der Kostenfunktion des KNN den zusätzlichen Schritt Einstellen eines Skalierungsfaktors λ, wobei der Skalierungsfaktor λ ein skalarer Faktor ist zum Einstellen eines Einflusses eines Terms der zu optimierenden Kostenfunktion. Es wird also vorgeschlagen, dass ein zusätzlicher Parameter zum Einstellen der Kostenfunktion vorgesehen wird, mit dem beispielsweise der Einfluss der zuvor beschriebenen Minimierung und Maximierung einstellbar ist.

Zudem versteht sich, dass die Optimierung so lange erfolgt, bis eine vorbestimmtes Abbruchkriterium erfüllt ist. Das Abbruchkriterium kann beispielsweise ein Erreichen einer gewünschten Klassifikationsgenauigkeit sein oder ein zeitliches Abbruchkriterium oder dergleichen. Das Abbruchkriterium kann auch eine festgelegte Anzahl an Trainingsschritten oder Updates der Gewichte sein.

In einem weiteren erfindungsgemäßen Aspekt wird eine Trainingseinrichtung zum Trainieren eines künstlichen neuronalen Netzes KNN und zur Erhöhung einer Klassifikationsgenauigkeit des KNN vorgeschlagen. Die Trainingseinrichtung kann dabei Teil eines Computersystems sein, auf dem das zuvor beschriebene Trainingsverfahren ausgeführt wird.

Die Trainingseinrichtung weist wenigstens einen Datenspeicher zum Bereitstellen eines gelabelten Trainingsdatensatzes zum Trainieren des KNN auf, wobei der gelabelte Trainingsdatensatz wenigstens erste Daten aufweist, die einer ersten Datenklasse zugeordnet sind, wobei die ersten Daten aus einer Vielzahl von ersten Datensamples ausgebildet sind und der Trainingsdatensatz zweite Daten aufweist, die einer zweiten Datenklasse zugeordnet sind, wobei die zweiten Daten aus einer Vielzahl von zweiten Datensamples ausgebildet sind.

Zudem weist die Trainingseinrichtung ein Trainingsmodul mit dem zu trainierenden KNN auf, wobei das Trainingsmodul zum Vorwärtspropagieren des bereitgestellten Trainingsdatensatzes von einer Eingangsschicht des KNN durch wenigstens eine versteckte Schicht bis zu einer Ausgangsschicht des KNN eingerichtet ist, insbesondere um die ersten Datensamples und die zweiten Datensamples in einen mehrdimensionalen Merkmalsraum abzubilden.

Zudem ist das Trainingsmodul zum Optimieren einer Kostenfunktion des KNN eingerichtet, wobei das Trainingsmodul zum Optimieren einen ersten Sampleschwerpunkt für die Vielzahl der ersten Datensamples bestimmt und einen zweiten Sampleschwerpunkt für die Vielzahl der zweiten Datensamples bestimmt.

Zudem minimiert das Trainingsmodul zum Optimieren der Kostenfunktion einen Abstand der ersten Datensamples zu dem ersten Sampleschwerpunkt und es minimiert einen Abstand der zweiten Datensamples zu dem zweiten Sampleschwerpunkt.

Zudem maximiert das Trainingsmodul einen Abstand des bestimmten ersten Sampleschwerpunktes zu dem bestimmten zweiten Sampleschwerpunkt.

Zum Durchführen der zuvor beschriebenen Minimierung und der Maximierung weist das Trainingsmodul vorzugsweise ein Optimierungsmodul auf, das zum Speichern einer Kostenfunktion und zum Berechnen eines Verlustes der gespeicherten Kostenfunktion eingerichtet ist.

Zum Optimieren bzw. zum Anpassen von Gewichten des KNN weist das Trainingsmodul vorzugsweise ein Anpassungsmodul auf, das dazu eingerichtet ist, die Gewichte des KNN in Abhängigkeit des mit der Kostenfunktion bestimmten Verlustes anzupassen.

Das Trainingsmodul ist somit Teil des Computersystems und es ist dazu eingerichtet, das in dem Computersystem hinterlegte KNN zu trainieren, beispielsweise durch Anpassung der Gewichte des KNN. Das Trainingsmodul ist beispielsweise Teil einer GPU oder einer CPU des Computersystems. Das Trainingsmodul ist also ein Modul, das eine funktional geschlossene Einheit darstellt und einen bestimmten Dienst bereitstellt, nämlich das KNN zu trainieren.

Es versteht sich, dass die Gewichte des KNN dazu veränderlich ausgebildet sind und von dem Anpassungsmodul anpassbar sind.

Zudem versteht sich, dass die Optimierung so lange erfolgt, bis ein vorbestimmtes Abbruchkriterium erfüllt ist. Das Abbruchkriterium kann beispielsweise eines der obig beschriebenen Abbruchkriterien sein.

Vorzugsweise ist die Trainingseinrichtung zur Ausführung des Verfahrens nach einer der vorstehenden Ausführungsformen eingerichtet.

Vorzugsweise wird das Trainingsmodul auf einer GPU ausgeführt. Vorzugsweise ist der Datenspeicher Teil der GPU oder Teil einer CPU oder ein externer Speicher, auf den das Trainingsmodul zugreifen kann.

Vorzugsweise umfasst das Trainingsmodul ein Vorverarbeitungsmodul, das dazu eingerichtet ist, den gelabelten Trainingsdatensatz in ein für das KNN geeignetes Format zu transformieren.

Hinsichtlich der beschriebenen Vorteile, bevorzugten Ausführungsformen und Einzelheiten zur Trainingseinrichtung wird auf die entsprechenden oben beschriebenen Vorteile, bevorzugten Ausführungsformen und Einzelheiten zu dem Optimierungsverfahren verwiesen.

Die vorliegende Erfindung wird nun nachfolgend exemplarisch anhand von Ausführungsbeispielen unter Bezugnahme auf die begleitenden Figuren näher erläutert, wobei für gleiche oder ähnliche Baugruppen dieselben Bezugszeichen verwendet werden:
- Fig. 1: zeigt schematisch das Grundprinzip eines Anwendungsgebietes eines KNN.
- Fig. 2: zeigt schematisch den Ablauf des erfindungsgemäßen Verfahrens zum Trainieren eines KNN in einer Ausführungsform.
- Fig. 3: zeigt schematisch eine Trainingseinrichtung in einer Ausführungsform.
- Fig. 4: zeigt einen mehrdimensionalen Merkmalsraum in dem Datensample abgebildet sind ohne und mit Sampleschwerpunktoptimierung.
- Fig. 5A - C: zeigen jeweils einen Vergleich der erfindungsgemäßen Sampleschwerpunktoptimierung mit dem bekannten Stand der Technik.

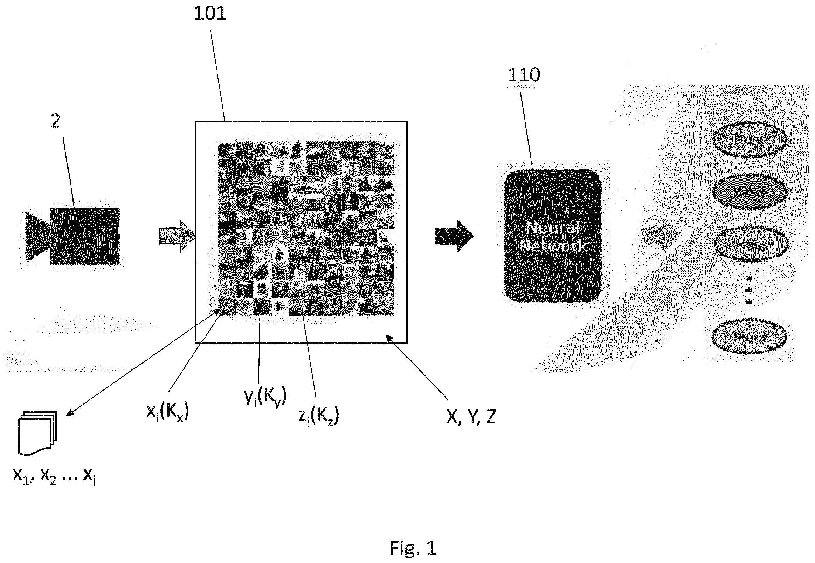

Figur 1 zeigt schematisch das Grundprinzip eines Anwendungsgebietes eines KNN 110, nämlich ein Computer Vision System. Das gezeigte Grundprinzip ist dabei, dass mit einer Bilderfassung 2, beispielsweise mit einem Kamerasystem ein Trainingsdatensatz erstellt wird, der in einem Datenspeicher 101 zum Trainieren eines KNN 110 bereitgestellt wird. Der gezeigte Trainingsdatensatz ist in der Figur 1 aus einer Vielzahl von Daten X, Y und Z ausgebildet, die wiederum aus einer Vielzahl von Datensamples xᵢ, yᵢ und zᵢ ausgebildet sind. Die Datensamples xᵢ, yᵢ und zᵢ sind dabei verschiedenen Datenklassen Kₓ, K_{y} und K_{z} zugeordnet. Die Daten X könnten beispielsweise Hundebilder sein, die Daten Y könnten Katzenbilder sein und die Daten Z könnten Mäusebilder sein, um ein einfaches Beispiel zu nennen. Die Gesamtmenge an Hundebildern X ist dann aus der Vielzahl von einzelnen Hundebildern xᵢ ausgebildet. Analoges gilt für die Daten Y und Z.

Der gelabelte Trainingsdatensatz wird in das KNN zum Trainieren des KNN eingeben. Das Trainieren des KNN erfolgt dabei, indem die Gewichte des KNN angepasst werden, was grundsätzlich bekannt ist.

Wenn das Training abgeschlossen ist, ist das KNN trainiert und es ist dann zur Klassifikation von nicht gelabelten Bildern eingerichtet. Wird beispielsweise dem KNN 110 nach dem Training ein Katzenbild gezeigt, klassifiziert das KNN das Katzenbild eigenständig als Katze, was durch die Hervorhebung hinter dem KNN 110 in der Figur 1 gezeigt ist.

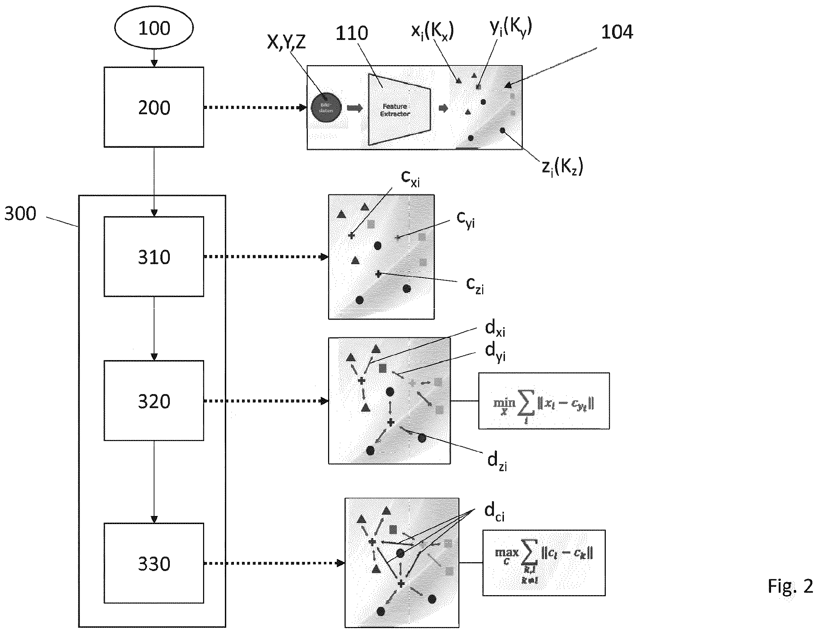

Figur 2 zeigt schematisch den Ablauf des erfindungsgemäßen Verfahrens zum Trainieren eines KNN in einer Ausführungsform. Das in der Figur 2 schematisch dargestellt computerimplementierte Verfahren zum Trainieren eines künstlichen neuronalen Netzes KNN, umfassend die folgenden Schritte:
In einem ersten Schritt 100 erfolgt ein Bereitstellen eines gelabelten Trainingsdatensatzes X, Y, Z zum Trainieren des KNN, wobei der gelabelte Trainingsdatensatz wenigstens erste Daten X aufweist, die einer ersten Datenklasse Kₓ zugeordnet sind, wobei die ersten Daten X aus einer Vielzahl von ersten Datensamples xᵢ ausgebildet sind und der Trainingsdatensatz zweite Daten Y aufweist, die einer zweiten Datenklasse K_{y} zugeordnet sind, wobei die zweiten Daten Y aus einer Vielzahl von zweiten Datensamples yᵢ ausgebildet sind. Das Bereitstellen des Datensatzes ist durch den rundlichen Block 101 veranschaulicht.

In einem zweiten Schritt 200 erfolgt ein Vorwärtspropagieren des bereitgestellten Trainingsdatensatzes von einer Eingangsschicht des KNN durch wenigstens eine versteckte Schicht bis zu einer Ausgangsschicht des KNN, insbesondere um die ersten Datensamples xᵢ und die zweiten Datensamples yᵢ in einen mehrdimensionalen Merkmalsraum 104 abzubilden. Dieser Schritt ist rechts neben dem Block 200 in der Figur 2 grafisch dargestellt. Der Trainingsdatensatz X, Y, Z der aus den Daten X, Y und Z ausgebildet ist, wird in das KNN 110 eingegeben, das auch als Feature Extractor bezeichnet werden kann. Das KNN bildet die Daten X, Y und Z bzw. dessen einzelne Datensamples xᵢ, yᵢ und zᵢ in den Merkmalsraum 104 ab. Es sind dabei beispielhaft drei Klassen und insgesamt neun Datensamples veranschaulicht. Die drei dreieckigen Datensamples xᵢ sind beispielsweise einer ersten Klasse Kₓ zugeordnet. Die drei rechteckigen Datensamples yᵢ sind beispielsweise einer zweiten Klasse K_{y} zugeordnet. Die drei runden Datensamples zi sind beispielsweise einer dritten Klasse Kz zugeordnet, wie beispielsweise in der Figur 1 veranschaulicht.

Der Schritt 300 ist der Schritt Optimieren einer Kostenfunktion des KNN. Dieser Schritt weist die drei weiteren Schritte 310 bis 330 auf, die nachfolgend beschrieben werden.

Im Schritt 310 erfolgt ein Bestimmen eines ersten Sampleschwerpunktes cₓᵢ für die Vielzahl der ersten Datensamples xᵢ und ein Bestimmen eines zweiten Sampleschwerpunkts c_{yi} für die Vielzahl der zweiten Datensamples yᵢ. Dieser Schritt ist rechts neben dem Block 310 in der Figur 2 grafisch dargestellt. Für die drei Datensamples xᵢ (Dreiecke) wird ein Klassenschwerpunk cₓᵢ bestimmt. Für die drei Datensamples yᵢ (Rechtecke) wird ein Klassenschwerpunk c_{yi} bestimmt. Für die drei Datensamples zᵢ (Kreise) wird ein Klassenschwerpunk c_{zi} bestimmt.

In Schritt 320 erfolgt ein Minimieren eines Abstands dₓᵢ der ersten Datensamples xᵢ zu dem bestimmten ersten Sampleschwerpunkt cₓᵢ und ein Minimieren eines Abstands d_{yi} der zweiten Datensamples yᵢ zu dem bestimmten zweiten Sampleschwerpunkt c_{yi}. Dieser Schritt ist rechts neben dem Block 320 in der Figur 2 grafisch dargestellt. Für die drei Datensamples xᵢ (Dreiecke) wird jeweils der Abstand dₓᵢ zum Klassenschwerpunk cₓᵢ bestimmt. Für die drei Datensamples yᵢ (Rechtecke) wird jeweils der Abstand d_{yi} zum Sampleschwerpunkt c_{yi} bestimmt. Für die drei Datensamples zi (Kreise) wird jeweils der Abstand dzi zum Klassenschwerpunk c_{zi} bestimmt. Diese Abstände werden dabei mit einer Normberechnung bestimmt, sämtliche Abstände dann aufsummiert und das Minimum für den aufsummierten Gesamtabstand bestimmt, was durch die gezeigte Formel zum Schritt 320 veranschaulicht wird.

In Schritt 320 erfolgt ein Maximieren eines Abstands d_{ci} des bestimmten ersten Sampleschwerpunktes cₓᵢ zu dem bestimmten zweiten Sampleschwerpunkt c_{yi}. Dieser Schritt ist rechts neben dem Block 330 in der Figur 2 grafisch dargestellt. Für die drei Sampleschwerpunkte cₓᵢ, c_{yi} und c_{zi} werden jeweils die Abstände untereinander bestimmt. Diese einzelnen Abstände werden mit einer Normberechnung bestimmt, sämtliche Abstände dann aufsummiert und das Maximum für den aufsummierten Gesamtabstand bestimmt, was durch die gezeigte Formel zum Schritt 330 veranschaulicht wird. Wie zu erkennen ist, sind in der gezeigten Formel cₗ und cₖ dargestellt, die Sampleschwerpunkte verschiedener Klassen beschreiben.

c_{yi}, cₗ und cₖ beschreiben in den gezeigten Formeln die verschiedenen Sampleschwerpunkte bzw. Klassenschwerpunkte.

xᵢ beschreibt in den gezeigten Formeln die verschiedenen Datensamples bzw. Trainingssamples.

Die Reihenfolge der Schritte 320 und 330 ist beliebig. Diese Schritte können gleichzeitig ausgeführt werden oder auch nacheinander oder in umgekehrter Reihenfolge stattfinden. Es könnte also zuerst der Abstand der Datensamples zu den jeweiligen Sampleschwerpunkten minimiert werden und anschließend der Abstand der Sampleschwerpunkte zueinander maximiert werden, oder umgekehrt. Die Minimierung und die Maximierung können auch gleichzeitig erfolgen. In der Figur 2 erfolgt zuerst die zuvor beschriebene Minimierung und anschließend die zuvor beschriebene Maximierung.

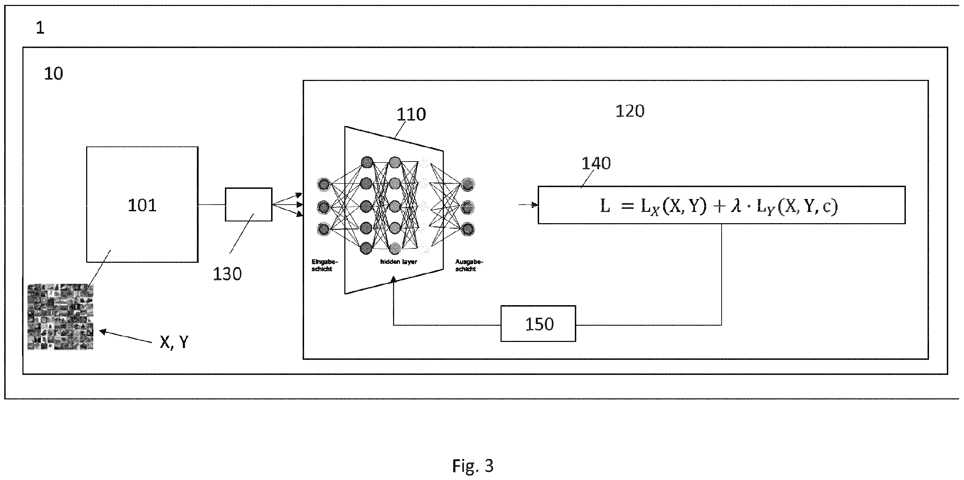

Figur 3 zeigt schematisch eine Trainingseinrichtung 10 in einer Ausführungsform. Die Trainingseinrichtung 10 ist beispielsweise Teil eines Computersystems 1.

Die Trainingseinrichtung 10 ist zum Trainieren des künstlichen neuronalen Netzes 110 eingerichtet und trägt zur Erhöhung einer Klassifikationsgenauigkeit des KNN bei. Die Trainingseinrichtung 10 umfasst dabei wenigstens einen Datenspeicher 101. In dem Datenspeicher ist ein gelabelter Trainingsdatensatz bereitgestellt. Der Datenspeicher 101 ist also zum Bereitstellen eines gelabelten Trainingsdatensatzes X, Y zum Trainieren des KNN eingerichtet. Der gelabelte Trainingsdatensatz wenigstens weist erste Daten X auf, die einer ersten Datenklasse Kₓ zugeordnet sind, wobei die ersten Daten X aus einer Vielzahl von ersten Datensamples xᵢ ausgebildet sind. Der Datensatz kann auch weitere Daten umfassen, wie beispielsweise die Daten Z, die in der Figur 1 und 2 dargestellt sind. Der Trainingsdatensatz weist zudem zweite Daten Y auf, die einer zweiten Datenklasse K_{y} zugeordnet sind, wobei die zweiten Daten Y aus einer Vielzahl von zweiten Datensamples yᵢ ausgebildet sind. Der Trainingsdatensatz ist beispielweise in der Figur 1 detaillierter gezeigt.

Die Trainingseinrichtung 10 weist ein Trainingsmodul 120 mit dem zu trainierenden KNN 110 auf. Das Trainingsmodul ist zum Vorwärtspropagieren des bereitgestellten Trainingsdatensatzes X, Y von einer Eingangsschicht des KNN 110 durch wenigstens eine versteckte Schicht bis zu einer Ausgangsschicht des KNN eingerichtet und bildet so die ersten Datensamples xᵢ und die zweiten Datensamples yᵢ in einen mehrdimensionalen Merkmalsraum ab.

Das Trainingsmodul 120 ist zudem zum Optimieren einer Kostenfunktion L des KNN eingerichtet. Die Kostenfunktion ist in der Figur 3 mit zwei Termen LX und LY dargestellt.

Das Trainingsmodul 120 ist mit einem Optimierungsmodul 140 dazu eingerichtet, einen ersten Sampleschwerpunkt cₓᵢ für die Vielzahl der ersten Datensamples xᵢ zu bestimmt und einen zweiten Sampleschwerpunkt c_{yi} für die Vielzahl der zweiten Datensamples yᵢ zu bestimmen.

Das Trainingsmodul 120 ist zudem mit dem Optimierungsmodul 140 dazu eingerichtet, einen Abstand der ersten Datensamples xᵢ zu dem ersten Sampleschwerpunkt cₓᵢ zu minimieren und einen Abstand der zweiten Datensamples yᵢ zu dem zweiten Sampleschwerpunkt c_{yi} zu minimieren.

Das Trainingsmodul 120 ist zudem mit dem Optimierungsmodul 140 dazu eingerichtet, einen Abstand des bestimmten ersten Sampleschwerpunktes cₓᵢ zu dem bestimmten zweiten Sampleschwerpunkt c_{yi} zu maximieren.

Das Trainingsmodul 120 ist mit einem Anpassungsmodul 150 zum Optimieren der Kostenfunktion L eingerichtet, wobei das Optimieren mittels Anpassung von Gewichten des KNN 110 mit dem Anpassungsmodul 150 erfolgt. Die Gewichte sind veränderbar ausgebildet.

Zudem veranschaulicht die Figur 3, den zusätzlichen bevorzugten Schritt Einstellen eines Skalierungsfaktors λ, wobei der Skalierungsfaktor λ ein skalarer Faktor ist zum Einstellen eines Einflusses eines Terms der zu optimierenden Kostenfunktion. Wie zu erkennen ist, wird durch den Faktor λ der zweite Termin LY gewichtet.

Zudem veranschaulicht die Figur 3 ein Vorverarbeitungsmodul 130 das dazu eingerichtet ist, den gelabelten Trainingsdatensatz in ein für das KNN geeignetes Format zu transformieren.

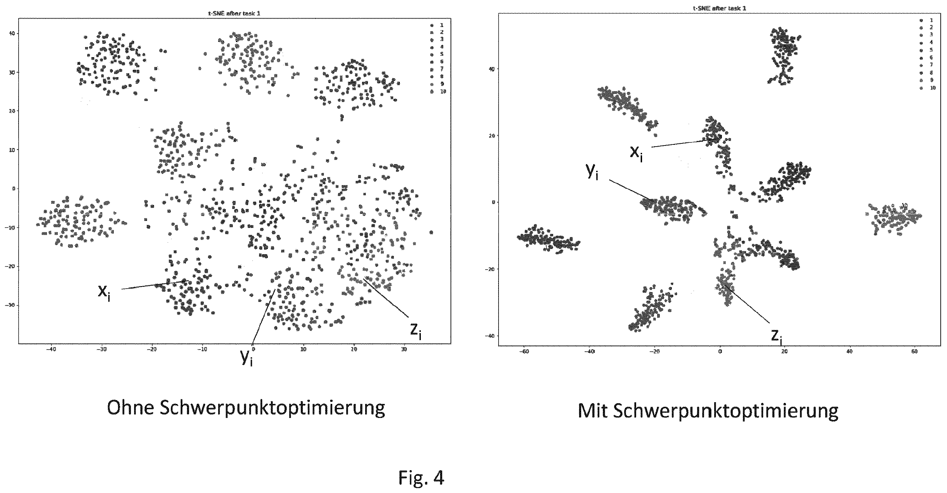

Figur 4 zeigt einen mehrdimensionalen Merkmalsraum in dem Datensamples abgebildet sind ohne und mit Sampleschwerpunktoptimierung. Es ist in der linken Veranschaulichung zu erkennen, dass die Datensamples xᵢ, yᵢ und zᵢ großflächig im Merkmalsraum verteilt sind und sich teilweise überschneiden. Dies macht eine eindeutige Klassifizierung der Datensamples besonders in den überschneidenden Bereich schwierig. In der rechten Veranschaulichung ist zu erkennen, dass mit einer Minimierung der Abstände zu einem Sampleschwerpunkt und einer Maximierung der Sampleschwerpunkte zueinander, die Datensamples xᵢ, yᵢ und wesentlich geordneter im Merkmalsraum verteilt sind und auch weiter voneinander beanstandet sind. Damit wird die die Klassifikationsgenauigkeit erhöht, da sich die Datensamples nur wenig überschneiden.

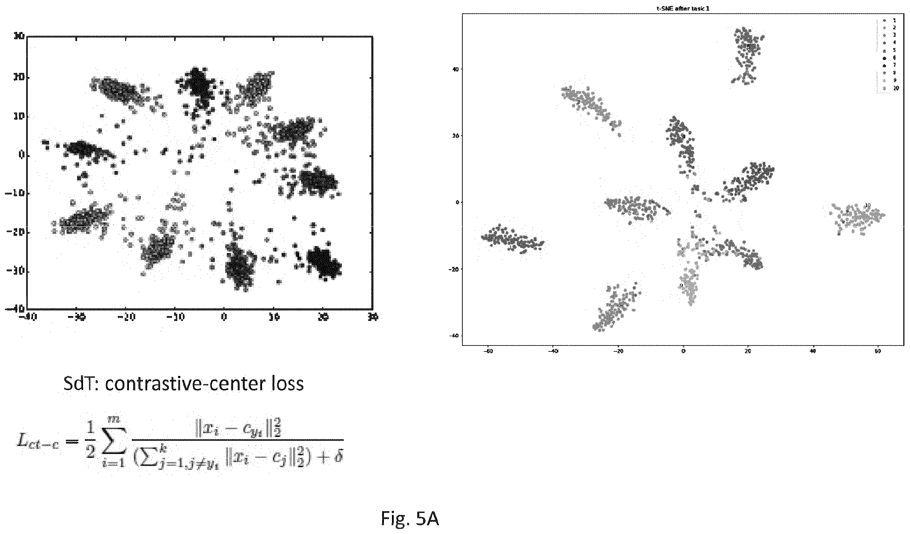

Die Figuren 5A bis 5C zeigen jeweils einen Vergleich der erfindungsgemäßen Sampleschwerpunktoptimierung mit dem bekannten Stand der Technik.

In der Figur 5A ist das Ergebnis des erfindungsgemäßen Verfahrens rechts gegenüber dem Stand der Technik links dargestellt, nämlich der bekannten Optimierungsmethode mit dem sog. "contrastive-center loss". Im Vergleich sind die Datensamples des Stands der Technik zwar auch geordnet, aber nicht in einem so hohen Maß, wie in der rechten Figur gezeigt. Wie der Formel in der Figur 5A zu entnehmen ist, wird nicht ein Abstand von Sampleschwerpunkten zueinander maximiert. Weder im Zähler noch im Nenner der Formel ist eine Abstandsbestimmung von Sampleschwerpunkten zueinander offenbart.

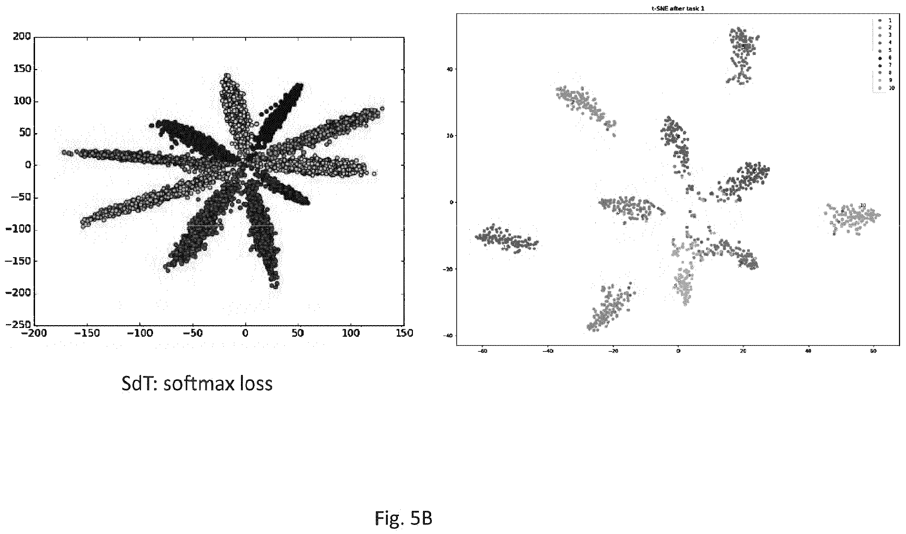

In der Figur 5B ist das Ergebnis des erfindungsgemäßen Verfahrens rechts gegenüber dem Stand der Technik links dargestellt, nämlich der bekannten Optimierungsmethode mit dem sog. "softmax loss". Im Vergleich sind die Datensamples zwar auch geordnet, aber nicht in einem so hohen Maß, wie in der rechten Figur gezeigt. Besonders in der Mitte gibt es im Stand der Technik viele Überschneidungen und damit ist die Wahrscheinlichkeit von falscher Klassifizierung erhöht.

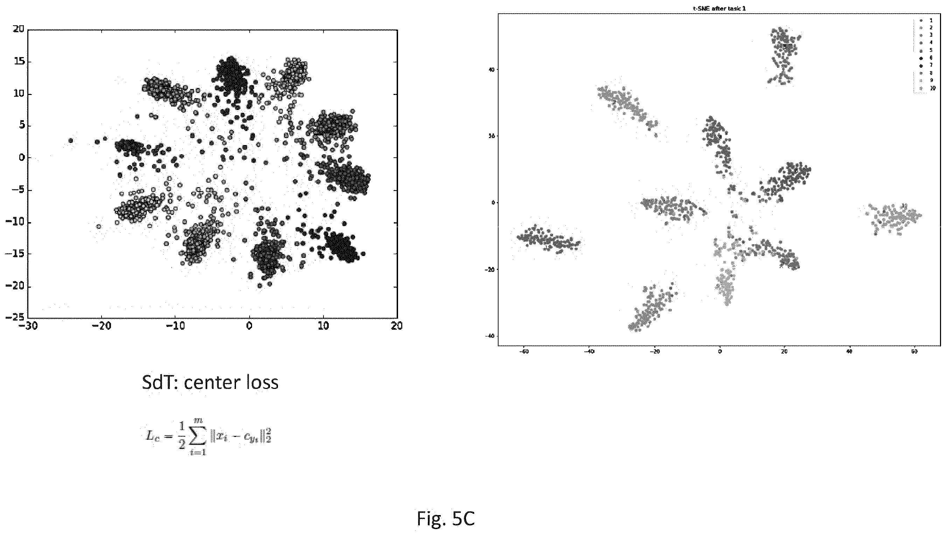

In der Figur 5C ist das Ergebnis des erfindungsgemäßen Verfahrens rechts gegenüber dem Stand der Technik links dargestellt, nämlich der bekannten Optimierungsmethode mit dem sog. "center loss". Im Vergleich sind die Datensamples des Stands der Technik zwar auch geordnet, aber nicht in einem so hohen Maß wie in der rechten Figur gezeigt. Wie der Formel in der Figur 5C zu entnehmen ist, wird nicht ein Abstand von Sampleschwerpunkten zueinander maximiert.

### Bezugszeichenliste

- 1: Computersystem
- 2: Bilderfassung
- 10: Trainingseinrichtung
- 101: Datenspeicher
- 102: Trainingsdatensatz
- 104: mehrdimensionaler Merkmalraum
- 110: KNN
- 120: Trainingsmodul
- 130: Vorverarbeitungsmodul
- 140: Optimierungsmodul
- 150: Anpassungsmodul
- X, Y, Z: Daten oder Trainingsdaten
- Kₓ, K_{y}, K_{z}: Datenklasse
- xᵢ, yᵢ, zᵢ: Datensample oder Trainingssample
- cₓᵢ, c_{yi}, c_{zi}: Sampleschwerpunkt oder Klassenschwerpunkt

## Patentansprüche

1. Computerimplementiertes Verfahren zum Trainieren eines künstlichen neuronalen Netzes KNN und insbesondere zur Erhöhung einer Klassifikationsgenauigkeit des KNN, umfassend die Schritte:
- Bereitstellen (100) eines gelabelten Trainingsdatensatzes (X, Y, Z) zum Trainieren des KNN, wobei der gelabelte Trainingsdatensatz wenigstens
- erste Daten (X) aufweist, die einer ersten Datenklasse (Kₓ) zugeordnet sind, wobei die ersten Daten (X) aus einer Vielzahl von ersten Datensamples (xᵢ) ausgebildet sind und der Trainingsdatensatz
- zweite Daten (Y) aufweist, die einer zweiten Datenklasse (K_{y}) zugeordnet sind, wobei die zweiten Daten (Y) aus einer Vielzahl von zweiten Datensamples (yᵢ) ausgebildet sind;
- Vorwärtspropagieren (200) des bereitgestellten Trainingsdatensatzes von einer Eingangsschicht des KNN durch wenigstens eine versteckte Schicht bis zu einer Ausgangsschicht des KNN, insbesondere um die ersten Datensamples (xᵢ) und die zweiten Datensamples (yᵢ) in einen mehrdimensionalen Merkmalsraum abzubilden;
- Optimieren (300) einer Kostenfunktion (L) des KNN, **dadurch gekennzeichnet, dass** das Optimieren
- ein Bestimmen (310) eines ersten Sampleschwerpunktes (cₓᵢ) für die Vielzahl der ersten Datensamples (xᵢ) und ein Bestimmen eines zweiten Sampleschwerpunkts (c_{yi}) für die Vielzahl der zweiten Datensamples (yᵢ) umfasst, und
- ein Minimieren (320) eines Abstands der ersten Datensamples (xᵢ) zu dem bestimmten ersten Sampleschwerpunkt (cₓᵢ) und ein Minimieren eines Abstands der zweiten Datensamples (yᵢ) zu dem bestimmten zweiten Sampleschwerpunkt (c_{yi}) umfasst, und ein
- Maximieren (330) eines Abstands des bestimmten ersten Sampleschwerpunktes (cₓᵢ) zu dem bestimmten zweiten Sampleschwerpunkt (c_{yi}) umfasst.

2. Verfahren nach Anspruch 1, wobei die ersten und zweiten Daten Bilddaten sind und jedes Datensample in dem Merkmalsraum eine Abbildung eines einzelnen Bildes entspricht, das in das KNN eingegebenen wurde.

3. Verfahren nach Anspruch 1 oder 2, wobei das Verfahren mit einem Computer Vision System ausgeführt wird, insbesondere mit einer GPU.

4. Verfahren nach einem der vorstehenden Ansprüche, wobei das Optimieren der Kostenfunktion durch Anpassung von Gewichten des KNN in einem überwachten Lernverfahren erfolgt.

5. Verfahren nach einem der vorstehenden Ansprüche, wobei das Optimieren der Kostenfunktion mittels eines Gradientenabstiegsverfahren oder dergleichen optimiert wird.

6. Verfahren nach einem der vorstehenden Ansprüche, wobei das KNN ein tiefes KNN mit wenigstens zwei versteckten Schichten ist, und das KNN vorzugsweise zur Bildklassifikation eingerichtet ist, wobei das KNN insbesondere ein faltendes KNN (CNN) ist, ein rekurrentes neuronales Netz (RNN) ist, ein residuales neuronales Netz (ResNet) ist oder dergleichen.

7. Verfahren nach einem der vorstehenden Ansprüche, wobei die Abstände der Datensamples (xᵢ, yᵢ) zu dem Sampleschwerpunkt (cₓᵢ, c_{yi}) aufsummiert werden und die Berechnung der Abstände mittels mit einer Normberechnung bestimmt wird.

8. Verfahren nach einem der vorstehenden Ansprüche, wobei die Abstände der Sampleschwerpunkte zueinander aufsummiert werden und die Berechnung der Abstände der Sampleschwerpunkte mit einer Normberechnung bestimmt wird.

9. Verfahren nach einem der vorstehenden Ansprüche, wobei der gelabelte Trainingsdatensatz eine Vielzahl von Daten (X, Y, Z) aufweist, die jeweils einer unterschiedlichen Datenklasse (Kₓ, K_{y}, K_{z}) zugeordnet sind und die Daten (X, Y, Z) aus einer Vielzahl von Datensamples (xᵢ, yᵢ, zᵢ) ausgebildet sind, und für jede Vielzahl von Datensamples (xᵢ, yᵢ, zᵢ) jeweils ein Klassenschwerpunkt (cₓᵢ, c_{yi}, c_{zi}) bestimmt wird, und der Abstand der Datensamples (xᵢ, yᵢ, zᵢ) zu den zugehörigen Klassenschwerpunkten (cₓᵢ, c_{yi}, c_{zi}) minimiert wird und anschließend der Abstand der Klassenschwerpunkte (cₓᵢ, c_{yi}, c_{zi}) zueinander maximiert wird.

10. Verfahren nach einem der vorstehenden Ansprüche, wobei das Optimieren der Kostenfunktion den zusätzlichen Schritt umfasst:
- Initiieren des ersten Sampleschwerpunktes und/oder des zweiten Sampleschwerpunkts mit einem Initialwert.

11. Verfahren nach einem der vorstehenden Ansprüche, der Schritt Optimieren (300) der Kostenfunktion (L) des KNN den zusätzlichen Schritt umfasst:
- Einstellen eines Skalierungsfaktors λ, wobei der Skalierungsfaktor λ ein skalarer Faktor ist zum Einstellen eines Einflusses eines Terms der zu optimierenden Kostenfunktion.

12. Trainingseinrichtung zum Trainieren eines künstlichen neuronalen Netzes KNN und zur Erhöhung einer Klassifikationsgenauigkeit des KNN, wobei die Trainingseinrichtung wenigstens
- einen Datenspeicher aufweist zum Bereitstellen eines gelabelten Trainingsdatensatzes (X, Y, Z) zum Trainieren des KNN, wobei der gelabelte Trainingsdatensatz wenigstens erste Daten (X) aufweist, die einer ersten Datenklasse (Kₓ) zugeordnet sind, wobei die ersten Daten (X) aus einer Vielzahl von ersten Datensamples (xᵢ) ausgebildet sind und der Trainingsdatensatz zweite Daten (Y) aufweist, die einer zweiten Datenklasse (K_{y}) zugeordnet sind, wobei die zweiten Daten (Y) aus einer Vielzahl von zweiten Datensamples (yᵢ) ausgebildet sind, und die Trainingseinrichtung
- ein Trainingsmodul mit dem zu trainierenden KNN aufweist, wobei das Trainingsmodul zum Vorwärtspropagieren des bereitgestellten Trainingsdatensatzes von einer Eingangsschicht des KNN durch wenigstens eine versteckte Schicht bis zu einer Ausgangsschicht des KNN eingerichtet ist, insbesondere um die ersten Datensamples (xᵢ) und die zweiten Datensamples (yᵢ) in einen mehrdimensionalen Merkmalsraum abzubilden, und das Trainingsmodul zudem zum Optimieren einer Kostenfunktion (L) des KNN eingerichtet ist, **dadurch gekennzeichnet, dass** das Trainingsmodul zum Optimieren
- einen ersten Sampleschwerpunkt (cₓᵢ) für die Vielzahl der ersten Datensamples (xᵢ) bestimmt und einen zweiten Sampleschwerpunkt (c_{yi}) für die Vielzahl der zweiten Datensamples (yᵢ) bestimmt, und das Trainingsmodul
- einen Abstand der ersten Datensamples (xᵢ) zu dem ersten Sampleschwerpunkt (cₓᵢ) minimiert und einen Abstand der zweiten Datensamples (yᵢ) zu dem zweiten Sampleschwerpunkt (c_{yi}) minimiert, und das Trainingsmodul
- einen Abstand des bestimmten ersten Sampleschwerpunktes (cₓᵢ) zu dem bestimmten zweiten Sampleschwerpunkt (c_{yi}) maximiert.

13. Trainingseinrichtung nach Anspruch 12, wobei die Trainingseinrichtung zur Ausführung des Verfahrens nach einem der vorstehenden Ansprüche 1 bis 11 eingerichtet ist.

14. Trainingseinrichtung nach Anspruch 12 oder 13, wobei das Trainingsmodul auf oder in einer GPU ausgeführt wird.
